# EUROPÄISCHE PATENTSCHRIFT

(11) **EP 0 976 928 B1**
(45) Veröffentlichungstag und Bekanntmachung des Hinweises auf die Patenterteilung: **25.08.2004**
(21) Anmeldenummer: 99114975.8
(22) Anmeldetag: 30.07.1999
(51) Int. Cl.: F04D 29/32, F04D 29/16

(54) **Schaufelanordnung für eine Strömungsmaschine**
Blade assembly for turbomachine
Ensemble de pale pour turbomachine

(30) Priorität: 31.07.1998 DE 19834647
(43) Veröffentlichungstag der Anmeldung: 02.02.2000
(73) Patentinhaber: DLR Deutsches Zentrum für Luft- und Raumfahrt e.V., 53175 Bonn (DE)
(72) Erfinder: Bechert, Dietrich, Dr.-Ing., 10625 Berlin (DE)
(74) Vertreter: Grünecker, Kinkeldey, Stockmair & Schwanhäusser Anwaltssozietät

(56) Entgegenhaltungen:
- DE-C- 3 908 285
- US-A- 2 920 864
- US-A- 3 193 185
- US-A- 4 023 350
- PATENT ABSTRACTS OF JAPAN vol. 1997, no. 05, 30. Mai 1997 (1997-05-30) & JP 09 004402 A (MITSUBISHI HEAVY IND LTD), 7. Januar 1997 (1997-01-07)

## Beschreibung

Die Erfindung betrifft eine Schaufelanordnung für eine Strömungsmaschine beispielsweise einen Verdichter, eine Pumpe oder eine Turbine, mit einer Schaufel und mindestens einer Wand, wobei sich die Schaufel von der Wand in eine Strömung erstreckt und sich im Betrieb der Strömungsmaschine im Übergangsbereich zwischen Wand und Schaufel eine Eckenströmung ausbildet.

Derartige Schaufelanordnungen finden in Strömungsmaschinen vieler Bauarten sowohl für flüssige als auch gasförmige Strömungsmedien Verwendung.

Bei Axialströmungsmaschinen erstrecken sich die Schaufeln von einer Nabe in radialer Richtung nach außen in die Strömung. Die Nabenabschnitte zwischen aufeinanderfolgenden Schaufeln stellen strömungstechnisch eine Wand dar, wobei sich im Übergangsbereich zwischen der Wand und der Schaufel eine Eckenströmung ausbildet. Die Schaufeln können entweder Teil eines sich drehenden Laufrades oder eines stillstehenden Leitrades sein.

Bei manchen Axialströmungsmaschinen ist die Schaufel zwischen der Nabe und einem ringförmigen Gehäuse angebracht, das relativ zur Nabe stillsteht. In diesem Fall bildet sich sowohl eine nabenseitige als auch eine gehäuseseitige Eckenströmung aus. Eine sehr komplexe Eckenströmung entsteht zwischen Schaufel und Gehäuse, wenn sich Gehäuse und Schaufel relativ zueinander drehen und durch einen kleinen Spalt voneinander getrennt sind.

Bei Radialströmungsmaschinen, wie beispielsweise Radialventilatoren, erstrecken sich die Schaufeln gewöhnlich in axialer Richtung des entsprechenden Schaufelrades. Die Schaufeln sind an der axialen Stirnfläche eines oder mehrerer ringförmiger Flansche montiert. Auch hier bildet sich eine Eckenströmung im Übergangsbereich zwischen Schaufel und Wand aus.

Die Technik dieser Strömungsmaschinen ist im allgemeinen bereits sehr ausgereift, was zu einem hohen Wirkungsgrad führt. Beispielsweise erreichen Axialverdichter Wirkungsgrade zwischen 85 % und 92 %, bei Turbinen liegen diese Werte sogar noch höher.

Allerdings sind theoretisch noch höhere Wirkungsgrade möglich. Betreibt man nämlich Tragflügel unter den Strömungsbedingungen, wie sie in Strömungsmaschinen vorherrschen (Reynoldszahlen 10⁵ bis 10⁶), so erzielen die Tragflügel Wirkungsgrade um die 98%. Ebenso weisen zweidimensionale Flügelgitter, die den Laufrädern eng entsprechen, geringere Verluste auf, als in Strömungsmaschinen auftreten. Derartige Wirkungsgrade müßten demnach auch von Schaufeln in Strömungsmaschinen erreichbar sein.

Aus dem Stand der Technik sind Lösungen bekannt, die durch den Einsatz von Hilfsflügeln in einer Kaskade einer Strömungsmaschine den Wirkungsgrad steigern können. Diese Hilfsflügel sollen zum einen eine großräumige Sekundärströmung reduzieren oder eliminieren, die sich in einer Kaskade aufgrund der verzögerten wandnahen Strömungen und der Druckverteilung innerhalb der Kaskade ausbildet. Außerdem sind aus dem Stand der Technik Einbauten bekannt, durch die Fluid einer Eckenströmung im Übergangsbereich zwischen Wand und Schaufel zugeleitet wird, so daß diese beschleunigt wird.

Dabei können die Hilfsflügel an der Schaufeloberfläche oder an der Oberfläche der Wand angeordnet sein. Eine gattungsgemäße Schaufelanordnung, bei der der Hilfsflügel an der Oberfläche der Schaufel angeordnet ist, ist aus der US 2,920,864 bekannt. Diese Hilfsflügel erzeugen jeweils eine Spitzenwirbel, dessen Drehsinn dem Drehsinn der Sekundärströmung entgegengerichtet ist. Dieser Längswirbel soll die Wirbel der Sekundärströmung schwächen oder auslöschen.

Bei der Beschaufelung der US 3,193,185 sind die Oberflächen der Schaufeln ebenfalls mit Hilfsflügeln versehen. Diese Hilfsflügel sollen eine stärkere Durchmischung der Grenzschicht bewirken, wodurch deren Ablösung verzögert wird. Diese Hilfsflügel wirken als Leitschaufeln, durch die Wandströmung aus schnellströmenderen Bereichen in langsamströmendere Bereiche geleitet ist. Der Nachteil dieser Anordnung liegt in einem unverhältnismäßig hohen Strömungswiderstand dieser Leitschaufeln.

Schaufelanordnungen, bei denen der Hilfsflügel an der Wand angeordnet ist, sind ebenfalls aus dem Stand der Technik bekannt. Eine gattungsgemäße Anordnung ist beispielsweise aus der US 3,193,185 bekannt. Dort ist ein Hilfsflügel zwischen zwei Schaufeln angeordnet der sich von der Wand weg in die Strömung erstreckt. Aufgrund der sich um den Hilfsflügels ausbildenden Druckverteilung erzeugt dieser in seinem Nachlauf einen Wirbel, der auf der Saugseite der linken Schaufel eine Geschwindigkeit von der Schaufelmitte in den Bereich der Eckenströmung induziert. Der Nachteil dieses Hilfsflügels liegt ebenfalls in seinem hohen Strömungswiderstand.

Aus der DE 39 08 285 ist ein Turbinenrad bekannt, das sowohl eine halbaxiale Fluidzuleitung als auch eine radiale Fluidzuleitung aufweist. Um im halbaxialen Betrieb eine Strömungsablösung zu vermeiden, sind zwischen den Turbinenschaufeln Hilfsschaufeln angeordnet, deren Schaufeltiefe etwa 50 % der Schaufeltiefe der Hauptschaufeln beträgt. Auch diese Hilfsschaufeln haben den Nachteil, daß ihr Strömungswiderstand für einen praktischen Einsatz in energieeffizienten Turbinen zu groß ist.

Auch aus der US 3,039,736 sind Hilfsschaufeln an der Wand einer Kaskade bekannt. Diese Hilfsflügel sollen die großräumige Sekundärströmung in der Kaskade unterdrücken. Da sich allerdings die Abströmkanten der Hilfsflügel auf gleicher Höhe wie die Abströmkanten der Schaufeln befinden, wird bei diesen Hilfsflügeln die Eckenströmung nicht durch einen in deren Nachlauf erzeugten Wirbel, sondern nur durch die Wirkung der Hilfsflügel als Leitschaufeln beeinflußt. Dies stellt aber einen sehr ineffizienten Einsatz der Hilfsflügel dar. Auf ähnlich Weise dienen die in der JP 2-223 605 und in der JP 9-004 402 gezeigten Hilfsschaufeln nur als Leitschaufeln. Eine gezielte Beeinflussung der Eckenströmung durch Längswirbel, die von den Hilfsflügeln in den Nachlauf erzeugt werden, ist nicht offenbart.

In Anbetracht des oben genannten Standes der Technik liegt der Erfindung daher die Aufgabe zugrunde, die Schaufeln von Strömungsmaschinen durch einfache bauliche Veränderungen an der Schaufelanordnung dahingehend zu verbessern, daß der Wirkungsgrad von Strömungsmaschinen steigt.

Diese Aufgabe wird erfindungsgemäß für eine Schaufelanordnung der eingangs genannten Art, bei der Hilfsflügel an der Schaufeloberfläche angeordnet ist, dadurch gelöst, daß die Oberfläche der Schaufel und/oder der Wand im Bereich der Eckenströmung mit zumindest einem gegenüber der Schaufel kleinen, sich von der Oberfläche der Schaufel und/oder der Wand weg in die Strömung erstreckendem Hilfsflügel versehen ist, der gegen die an dieser Stelle herrschende Strömung angestellt ist, wobei sich im Betrieb der Strömungsmaschine im Nachlauf des Hilfsflügels ein Wirbel bildet, dessen Drehsinn so gerichtet ist, daß auf der dem Hilfsflügel zugeordneten Schaufeloberfläche eine Geschwindigkeit von der Schaufelmitte hin zum Übergangsbereich von Wand und Schaufel induziert ist.

Für eine Schaufelanordnung, bei der der Hilfsflügel an der Oberflächen der Wand angeordnet ist, wird diese Aufgabe erfindungsgemäß dadurch gelöst, daß der Hilfsflügel als ein gegenüber der Schaufel kleiner Wirbelgenerator ausgebildet und im Bereich der Eckenströmung angeordnet ist.

Diese Lösung ist einfach und führt zu Verbesserungen im Wirkungsgrad der Strömungsmaschine, die im Bereich mindestens 1 % bis 3 % liegen. Da bei einer Gasturbine wenigstens 75 % der Turbinenleistung in die Verdichterstufe gehen, beträgt der durch die erfindungsgemäße Lösung erreichte Anstieg des Wirkungsgrades der Gasturbine, bei Anwendung der Erfindung allein auf die Verdichterstufe bereits mindestens 3 %.

Das Wirkprinzip, das dem Hilfsflügel zugrunde liegt, beruht auf der Vermeidung bzw. Verringerung der Ablösung der Eckenströmung. Die Eckenströmung ist aufgrund der Nähe zu den beiden Oberflächen von Wand und Schaufel sehr langsam und löst demzufolge bereits im Betrieb der Strömungsmaschine ab. Diese Ablösung der Eckenströmung ist mit Verlusten behaftet und erzeugt darüber hinaus Schwingungen und Strömungslärm.

Im Stand der Technik sind zwar bereits einzelne Vorrichtungen bekannt, mit denen eine Ablösung der Eckenströmung wirksam vermieden werden kann. Diese Methoden beruhen aber allesamt auf dem Prinzip, daß die Eckenströmung unter Aufbringen von extem erzeugter Energie beeinflußt wird. Beispielsweise wird Fluid in die Eckenströmung mit hoher Geschwindigkeit möglichst tangential zur Oberfläche der Schaufel ausgeblasen, so daß die Eckenströmung beschleunigt wird und nicht mehr ablöst. Auch durch Absaugen von Fluid im Bereich der Eckenströmung läßt sich die Ablösung vermeiden, indem das langsame Fluid aus der Eckenströmung entfernt wird und durch das schneller strömende Fluid der von der Wand im wesentlichen unbeeinflußten Außenströmung ersetzt wird.

Diese Maßnahmen benötigen jedoch zum einen einen hohen Energieaufwand, da jeweils eine ausreichende Pumpleistung zum Ansaugen oder Ausblasen bereitgestellt werden muß. Damit diese Methoden tatsächlich zu einem erhöhten Wirkungsgrad führen, müssen die durch diese Maßnahmen erreichten Verbesserungen des Wirkungsgrades mindestens den Energiebedarf der Pumpeinrichtungen decken. Dies macht diese Maßnahmen aber nur in eng umgrenzten Einsatzgebieten bzw. nur einigen wenigen Strömungskonfigurationen sinnvoll. Außerdem ist der konstruktive Aufwand dieser Maßnahmen sehr hoch, da für das zu- bzw. abgeführte Fluid Leitungen in der Strömungsmaschine vorgesehen sein müssen. Sind im Fluid Verunreinigungen vorhanden, so können die Leitungen der Luftzufuhr bzw. Luftabfuhr leicht verstopfen und die gesamten Maßnahmen zur Strömungsbeeinflussung unwirksam machen.

Aus diesem Grunde wird bei der vorliegenden Erfindung ein anderer Weg beschritten, bei dem ein angestellter Hilfsflügel, in der Strömungstechnik zuweilen auch als Wirbelgenerator bezeichnet, auf die Oberfläche der Schaufel und/oder der Wand angebracht wird. Dieser Hilfsflügel erzeugt in seinem Nachlauf einen einzigen starken Längswirbel, also einen Wirbel, dessen Achse im wesentlichen in Strömungsrichtung ausgerichtet ist. Da der Hilfsflügel im Bereich der Eckenströmung angebracht ist, beeinflußt dieser Wirbel die Eckenströmung, indem er aufgrund einer Drehbewegung schnellströmendes Fluid der Außenströmung entlang der dem Hilfsflügel zugeordneten Schaufeloberfläche der langsamen Eckenströmung zuführt, diese beschleunigt und so am Ablösen hindert.

Gegenüber anderen Methoden hat der Hilfsflügel den Vorteil, daß er keine Energiezufuhr von außen benötigt und so jederzeit funktionsfähig ist. Der Hilfsflügel ist mechanisch einfach zu fertigen und unempfindlich gegen Verunreinigungen in der Strömung.

Ein weiterer Effekt des Hilfsflügels liegt darin, daß er im Strömungsbereich in Wandnähe, der sogenannten Grenzschicht, aufgrund seiner Anstellung gegen die dort herrschende Strömungsrichtung als Düse wirkt und die Eckenströmung kanalisiert und dadurch beschleunigt. Gleichzeitig wirkt er als Zaun, der verhindert, daß langsam strömendes Fluid der Eckenströmung sich mit der schnelleren Umströmung der Schaufelmitte vermischen kann.

Für den Erfinder war es völlig überraschend, daß der Hilfsflügel im Schaufel-Wand-Übergangsbereich keinen zusätzlichen Strömungswiderstand wie bei einer Anordnung in Schaufelmitte erzeugt, obwohl er ja ein zusätzliches Strömungshindernis in der Strömungsmaschine darstellt. Dieser Effekt konnte in Versuchen nachgewiesen werden und kann nur so erklärt werden, daß der durch die nun nicht mehr ablösende Eckenströmung erzielte Gewinn an Wirkungsgrad die durch den Hilfsflügel erzeugten Verluste übertrifft. Auch das zusätzliche Gewicht des Hilfsflügels wird durch den aufgrund der anliegenden Eckenströmung gestiegenen Auftrieb der Schaufeln und die damit verbundene Leistungserhöhung mehr als kompensiert.

Da die Strömungsablösung der Eckenströmung bei der erfindungsgemäßen Schaufel zuverlässig vermieden wird, können Strömungsmaschinen über weitaus größere Betriebsbereiche als bislang effizient betrieben werden. Die von der Ablösung erzeugten Vibrationen und Strömungslärm werden durch den Hilfsflügel ebenfalls verringert.

Der an der Wand angeordnete Hilfsflügel hat den Vorteil, daß er bei einem Auswechseln der Schaufeln und bei verstellbaren Schaufeln immer eine korrekte relative Lage zur Schaufel hat.

Die seitliche Entfernung des Hilfsflügels von der Gehäusewand sollte nicht zu groß sein, da sonst die Eckenströmung im Bereich des Schaufel-Wand-Überganges nicht mehr vom Hilfsflügel beeinflußt werden kann. Die exakte Größe des Hilfsflügels, die notwendig ist, um in optimaler Weise zu einer Beeinflussung der Eckenströmung, also zu einem maximalen Wirkungsgradgewinn zu gelangen, kann der Fachmann ohne weitere eigene Überlegungen durch Versuche bestimmen. Zunächst wird empfohlen, mit einem Hilfsflügel anzufangen, bei dem eine Ablösung der Eckenströmung sicher vermieden werden kann. Sukzessive sollte dann der Hilfsflügel verkleinert werden, bis der gewünschte Effekt anfängt auszubleiben und die Eckenströmung wieder anfängt abzulösen. In diesem Grenzbereich ist der durch den Hilfsflügel selbst verursachte Verlust bzw. sein Strömungswiderstand am geringsten. Wenn der Hilfsflügel gerade nur so groß ist, daß die Ablösung der Eckenströmung gerade unterdrückt wird, sind die Strömungsverluste am geringsten und der Wirkungsgradgewinn am größten. Die Abmessungen eines auf diese Weise geeignet dimensionierten Wirbelgenerators sind dann überraschend klein und liegen im allgemeinen im Bereich von wenigen Prozent der Schaufeltiefe.

Der Wirbel, durch den die Eckenströmung mit der Außenströmung durchmischt wird und dadurch die Ablösung der Eckenströmung verringert bzw. verhindert, kann dadurch verstärkt werden, daß in einer weiteren vorteilhaften Ausgestaltung der Erfindung eine stromauf weisende Anströmkante des Hilfsflügels in einem anderen Abstand von einer von Schaufel und Wand gebildeten Ecke angeordnet ist als eine stromab weisende Abströmkante des Hilfsflügels. Dabei kann in einer vorteilhaften Weiterbildung die Abströmkante von der Wand geringer beabstandet sein als die Anströmkante, wenn der Hilfsflügel an der Schaufeloberfläche angebracht ist. Wenn der Hilfsflügel an der Wand angebracht ist, dann ist es von Vorteil, wenn die Abströmkante geringer von der Schaufeloberfläche beabstandet ist als die Anströmkante. Diese Maßnahmen führen zu einer verstärkten Wirbelbildung und erhöhen die Kanalisierungswirkung des Hilfsflügels. Außerdem ist bei dieser Anstellung der korrekte Drehsinn des Wirbels sichergestellt.

Um die energiereiche Außenströmung in die Ecke zwischen Schaufel und Wand hineinzuleiten und damit die Eckenströmung stark zu beschleunigen, kann eine Höhe des Hilfsflügels in einer Richtung senkrecht zur Oberfläche der Schaufel vorteilhaft mindestens einer Grenzschichtdicke der Schaufelumströmung an der Stelle des Hilfsflügels entsprechen. Bei dem an der Wand angebrachten Hilfsflügel kann die Höhe des Hilfsflügel über der Wand zumindest der Grenzschichtdicke der Wandströmung an der Stelle des Hilfsflügels entsprechen. Ein Hilfsflügel mit diesen Abmessungen verursacht nur geringe Strömungsverluste und führt sicher zu einer Beeinflussung der Eckenströmung. Die Grenzschichtdicke der Schaufelumströmung an der Stelle des Hilfsflügels kann beispielsweise durch Messen eines Geschwindigkeitsprofils an dieser Stelle bestimmt werden. Dem Fachmann sind derartige Meßverfahren geläufig.

Der Hilfsflügel kann sich im wesentlichen senkrecht von der Oberfläche der Schaufel in die Strömung erstrecken und auf diese Weise als eine Barriere zwischen der Eckenströmung und der Umströmung der Schaufel in Schaufelmitte wirken. Eine stärkere Düsenwirkung in Richtung auf den Übergangsbereich zwischen Schaufel und Wand kann erreicht werden, wenn sich in einer weiteren vorteilhaften Ausgestaltung der Hilfsflügel von der Oberfläche der Schaufel aus in Richtung der Wand bzw. von der Wand aus in Richtung der Schaufeloberfläche erstreckt. Um diese Düsenwirkung nochmals zu verstärken, kann sich der Hilfsflügel in einer weiteren Ausgestaltung auch brückenförmig von der Schaufeloberfläche zur Wand erstrecken.

Wenn der Hilfsflügel auf der Schaufeloberfläche in einem Abstand von der Wand angeordnet ist, der 5% bis 30% der Schaufeltiefe entspricht, so wird eine wirksame Beeinflussung der Eckenströmung erreicht, ohne daß die durch den Hilfsflügel erzeugten Strömungsverluste zu groß werden und die Strömung in Schaufelmitte beeinflußt wird.

Die Eckenströmung ist vor allem an der Saugseite der Schaufel von Ablösung bedroht. Daher ist es in einer vorteilhaften Weiterbildung der Erfindung sinnvoll, wenn der Hilfsflügel an der Saugseite der Schaufel angeordnet ist.

Die Herstellkosten der erfindungsgemäßen Schaufel können gesenkt werden, wenn der Hilfsflügel im wesentlichen plattenförmig oder in Form einer, vorzugsweise schwach, gewölbten Platte ausgestaltet ist. Beispielsweise kann der Hilfsflügel aus Blech oder aus Kunststoff in diesen Formen leicht hergestellt werden. Für Strömungsmaschinen, in denen besonders hohe Strömungsgeschwindigkeiten auftreten, kann eine Ablösung der Eckenströmung besonders wirksam dann unterdrückt werden, wenn der Hilfsflügel ein einem Tragflügel ähnliches Dickenprofil aufweist. Derartige Dickenprofile erzeugen in ihrem Nachlauf bereits bei geringen Anstellwinkeln einen starken Wirbel.

Um den Nachlauf des Hilfsflügels zu optimieren und einen möglichst starken Wirbel zu erhalten, kann die Länge des Hilfsflügels in einer vorteilhaften Weiterbildung der Schaufel in Richtung der Schaufelumströmung mindestens einer Höhe des Hilfsflügels senkrecht zur Oberfläche der Schaufel und/oder Wand entsprechen. In diesem Zusammenhang kann es besonders vorteilhaft sein, wenn die Länge des Hilfsflügels doppelt so groß ist wie seine Höhe.

Um die vom Hilfsflügel erzeugten Strömungsverluste gering zu halten, sollte die Strömung um den Hilfsflügel nicht ablösen. Daher kann in einer vorteilhaften Ausgestaltung der Hilfsflügel mit einem Anstellwinkel zwischen 3° und 30°, vorzugsweise zwischen 5° und 15°, gegen die Schaufelumströmung an der Stelle des Hilfsflügels angestellt sein. Da die Strömungsrichtungen in einer Strömungsmaschine sich über die Schaufel ständig ändern, ist es in diesem Zusammenhang stets sinnvoll, die Richtungsangaben mit einer lokalen Strömungsrichtung an der Stelle des Hilfsflügels zu verbinden.

Der Hilfsflügel wird dann unwirksam, wenn die Strömung an seiner Position bereits abgelöst ist. Das bedeutet, daß er vorzugsweise in einem vorderen Bereich des Tragflügels angeordnet sein sollte, wo keine Ablösung stattfindet. Dies ist sicher dann der Fall, wenn in einer weiteren vorteilhaften Ausgestaltung der Hilfsflügel in einem Bereich der Schaufel angeordnet ist, in dem der statische Druck in Richtung der Umströmung der Schaufel im Betrieb nicht oder nur gering zunimmt.

Je nach Strömungsmaschine und den darin herrschenden Strömungsbedingungen kann der Umriß des Hilfsflügels in Blickrichtung senkrecht zur Richtung der Schaufelumströmung an der Stelle des Hilfsflügels im wesentlichen dreieckig oder im wesentlichen rechteckig sein. Auch kann die Anströmkante des Hilfsflügels gerade oder gekrümmt sein. Gekrümmte oder geneigte Anströmkanten verhindern, daß sich Verunreinigungen an den Anströmkanten festsetzen können. Dreieckige bzw. deltaflügelartige Hilfsflügel erzeugen an ihren Vorderkanten schwächere Hufeisenwirbel und führen dadurch zu geringeren Strömungsverlusten.

Die Verbindungsart des Hilfsflügels mit der Schaufeloberfläche richtet sich nach den an der Schaufel herrschenden Strömungsbedingungen und den für die Schaufeln verwendeten Werkstoffen. Beispielsweise kann der Hilfsflügel an der Schaufeloberfläche durch ein thermisches Fügeverfahren wie Schweißen, insbesondere Punktschweißen, oder Hartlöten befestigt sein. Diese Befestigungsart gibt besonders belastbare Verbindungen. Wenn der Hilfsflügel mit der Schaufel verschraubt oder vernietet ist, dann läßt sich der Hilfsflügel zu Wartungs- oder Reparaturzwecken leicht entfernen und auswechseln. Das Verkleben des Hilfsflügels mit der Schaufel wiederum stellt eine schnelle und billige Befestigungsvariante dar.

In einer weiteren vorteilhaften Ausgestaltung kann der Hilfsflügel einstückig mit der Schaufel hergestellt und beispielsweise durch Schmieden und/oder Sintern und/oder Ausfräsen und/oder einem gelvanischen Umformverfahren wie Elektroerodieren ausgeformt sein. Diese Art der Herstellung des Hilfsflügels ermöglicht die Fertigung von Schaufel und Hilfsflügel in einem Schritt. Weitere Bearbeitungsstationen sind nicht nötig, was die Herstellzeiten und -kosten senkt.

Zum Nachrüsten bestehender Schaufeln kann der Hilfsflügel in einem Schutzüberzug der Schaufel integriert sein, der zur Schwingungsdämpfung oder als Korrosionsschutz über die Schaufel gezogen ist. In dieser Ausgestaltung lassen sich bereits bestehende Strömungsmaschinen leicht und kostengünstig mit einem Hilfsflügel nachgerüstet werden.

Die Erfindung ist besonders gut bei Strömungsmaschinen zu verwenden, die als Axialströmungsmaschine ausgebildet sind. Die Unterdrückung der Ablösung kann zuverlässig vermieden werden, wenn die Schaufel Teil eines Laufrades oder auch eines Leitrades ist. Bei Axialströmungsmaschinen sind die Schaufeln von Laufrad oder Leitrad im allgemeinen an einer Nabe befestigt, wobei die Wand von der Nabe gebildet ist. Allerdings kann die Schaufel in einer vorteilhaften Weiterbildung auch zwischen einer Nabe und einem Gehäuse angeordnet sein.

Die Erfindung betrifft des weiteren einen Bausatz für eine Strömungsmaschine, bestehend aus einer Schaufel und einem eine Wand bildenden Schaufelhalter, in dem die Schaufel gehalten ist. Erfindungsgemäß ist ein Hilfsflügel vorgesehen, mit dem die Schaufel und/oder die Wand gemäß einer der vorstehenden Ausgestaltungen ausrüstbar ist. Dieser Schaufelhalter kann beispielsweise bei Axialströmungsmaschinen eine Nabe oder ein Gehäuse sein. Bei Radialströmungsmaschinen ist der Schaufelhalter meist ein ringförmiger Flansch.

Im folgenden wird der Aufbau und die Funktion der erfindungsgemäßen Schaufel anhand von Ausführungsbeispielen unter Zuhilfenahme der Zeichnungen beispielhaft erläutert.

Es zeigen:
- Fig. 1: eine perspektivische Ansicht eines ersten Ausführungsbeispiels der erfindungsgemäßen Schaufel.
- Fig. 2a: eine erste Abänderung des Ausführungsbeispiels der Fig. 1 in einer Ansicht entlang des Pfeils II der Fig. 1.
- Fig. 2b: eine zweite Abänderung des Ausführungsbeispiels der Fig. 1 in einer Ansicht entlang des Pfeils II der Fig. 1.
- Fig. 3a: eine Ansicht des ersten Ausführungsbeispiels der Fig. 1 entlang des Pfeiles III der Fig. 1.
- Fig. 3b: eine dritte Abänderung des ersten Ausführungsbeispiels der Fig. 1 in einer Ansicht entlang Pfeil III.
- Fig. 3c: eine vierte Abänderung des ersten Ausführungsbeispiels der Fig. 1 in einer Ansicht entlang Pfeil III.
- Fig. 3d: eine fünfte Abänderung des ersten Ausführungsbeispiels der Fig. 1 in einer Ansicht entlang Pfeil III.
- Fig. 4: ein zweites Ausführungsbeispiel der erfindungsgemäßen Schaufel mit Hilfsflügel in einer perspektivischen Ansicht.
- Fig. 5: ein drittes Ausführungsbeispiel der erfindungsgemäßen Schaufel mit Hilfsflügel in einer perspektivischen Ansicht.
- Fig. 6: eine perspektivische Ansicht zweier Schaufeln zur Erläuterung der Strömungsverhältnisse im Wand-Schaufel-Übergangsbereich.
- Fig. 7: eine Darstellung von Auftriebspolaren von Schaufeln mit und ohne Hilfsflügeln.

In den folgenden Zeichnungen und den dazugehörigen Erläuterungen sind jeweils gleiche Merkmale mit gleichen Bezugszeichnungen versehen.

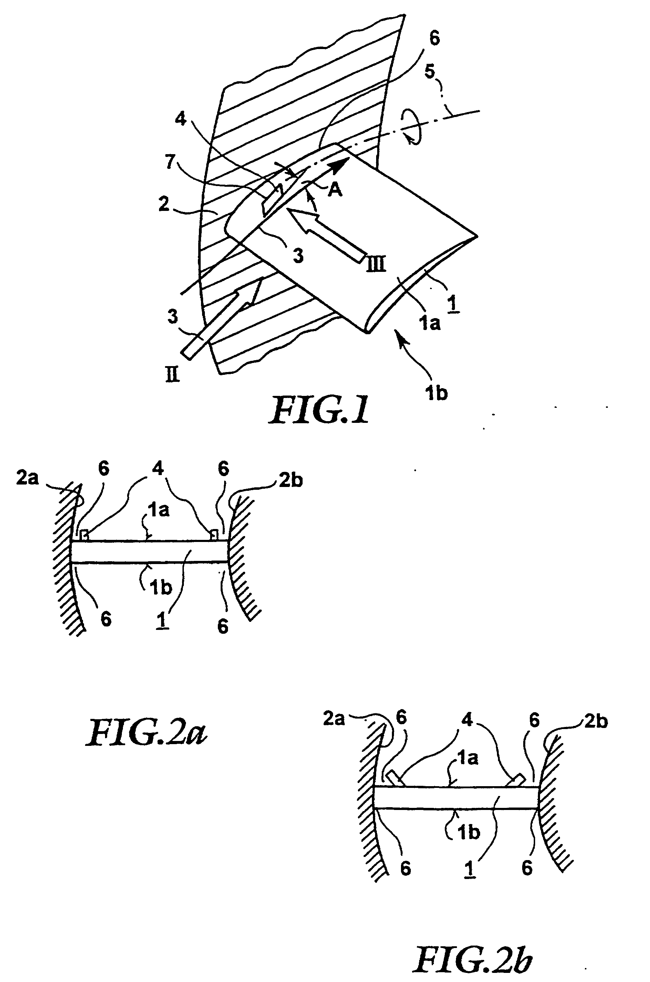

Fig. 1 zeigt eine erstes Ausführungsbeispiel der Schaufel 1, die sich von einer Wand 2 in eine Strömung 3 erstreckt. In der Fig. 1 stellt die Wand 2 ein ringförmiges Gehäuse dar. Fig. 1 zeigt eine schräge Aufsicht auf die Saugseite der Schaufel 1. Die Saugseite ist diejenige Seite der Schaufel, an der aufgrund der dort vorherrschenden höheren Strömungsgeschwindigkeiten gegenüber der anderen Seite der Schaufel 1 ein Unterdruck erzeugt wird.

Auf der Saugseite ist ein Hilfsflügel 4 angebracht, der sich von der Oberfläche der Schaufel 1 in die Strömung 3 erstreckt. Der Hilfsflügel ist leicht gegen die Strömung 3 an der Stelle des Hilfsflügels 4 angestellt, so daß in seinem Nachlauf ein Wirbel 5 erzeugt wird.

Der Hilfsflügel 4 ist in der Nähe des Übergangs zwischen Schaufel und Gehäusewand, also der Ecke 6, im vorderen Bereich der Schaufel 1 angeordnet.

Der Hilfsflügel 4 wirkt durch seine Anstellung schräg zur Strömung dem Eindringen von langsamen Fluid in die Schaufelumströmung entgegen. Außerdem ragt er mit seiner Höhe etwas aus der örtlichen Grenzschicht in die ungestörte Außenströmung um die Schaufel 1. Dadurch kanalisiert er das schnellströmende Fluid der Außenströmung in die Ecke zwischen Schaufel und Wand und führt damit der Eckenströmung kinetische Energie zu. Durch seine Anstellung wirkt der Hilfsflügel wie ein kleiner Tragflügel und erzeugt daher an seinem Ende 7, d.h. an seiner Oberkante, den sich stromab ausbildenden Wirbel 5. Aufgrund dieser wirbelerzeugenden Eigenschaft werden derartige Hilfsflügel auch als Wirbelgeneratoren bezeichnet. Der Wirbel 5 induziert auf der Schaufeloberfläche eine Geschwindigkeit in Richtung der Wand 2. Diese Geschwindigkeit wirkt ebenfalls dem Eindringen von langsamen Fluid von der Ecke 6 in die Schaufelströmung in der Mitte der Schaufel entgegen, indem sie schnellströmendes Fluid aus der Schaufelmitte in den Bereich der Ecken leitet.

Fig. 2a zeigt das Ausführungsbeispiel der Fig. 1 in einer Ansicht in Richtung der Anströmung 3, entlang des Pfeiles II der Fig. 1. In dieser Abänderung ist die Schaufel 1 zwischen einer Nabe 2a und einem Gehäuse 2b befestigt. In Umfangsrichtung der Nabe 2a bzw. des Gehäuses 2b sind mehrere radial verlaufende Schaufeln 1 angeordnet. Der Einfachheit halber ist jedoch nur eine Schaufel 1 gezeigt. Die Hilfsflügel 4 dieser Abänderung erstrecken sich senkrecht zur Oberfläche der Schaufel 1 in der Schaufelumströmung.

In der Fig. 2b ist eine zweite Abänderung der in Fig. 1 gezeigten Konfiguration dargestellt, in der die Hilfsflügel 4 sich von der Oberfläche der Saugseite 1a der Schaufel 1 aus schräg in Richtung der jeweils zugeordneten und nahegelegenen gehäuse- oder nabenseitigen Wand 2a, 2b erstrecken. Durch diese schräge Anbringung wird die Kanalisationswirkung der Hilfsflügel 4 in Richtung auf die Ecken 6 zwischen Schaufel 1 und Wand 2a bzw. 2b nochmals verstärkt. Im Gegensatz zur ersten Abänderung der Fig. 2a sind in der zweiten Abänderung der Fig. 2b an der Druckseite 1b der Schaufel 1 keine Hilfsflügel 4 vorgesehen. Dies ist insbesondere dann sinnvoll, wenn das Profil der Schaufel 1 so ausgelegt ist, daß die Strömung im Bereich der druckseitigen Ecken 6 beispielsweise aufgrund stetiger Beschleunigung nicht ablöst.

Die Reynoldszahl der Schaufel 1 des ersten Ausführungsbeispiels liegt zwischen 10⁵ und 10⁶. Die Reynoldszahl des Hilfsflügels 4 auf der Schaufel 1 liegt in der Größenordnung von ca. 10⁴. In diesem Bereich können als Profile des Hilfsflügels 4 ebene oder schwach gewölbte dünne Platten verwendet werden. Die Strömung um den Hilfsflügel liegt bei den Strömungsverhältnissen in Wandnähe bis zu einem Winkel von 15° bis 20° an. Für weniger hohe Hilfsflügel erhält man sogar noch höhere zulässige Anstellwinkel. Um einen ausreichend starken Wirbel 5 im Nachlauf zu erhalten, empfiehlt es sich, den Hilfsflügel 4 um mindestens 5° anzustellen. Besitzt der Hilfsflügel 4 eine in Strömungsrichtung 3 unterschiedliche Dickenverteilung, so können auch geringere Anstellwinkel eingestellt werden.

Der Hilfsflügel 4 des Ausführungsbeispiels der Fig. 1 ist im vorderen Bereich der Saugseite 1a der Schaufel 1 angebracht. In diesem Bereich steigt der statische Druck in Strömungsrichtung nicht an.

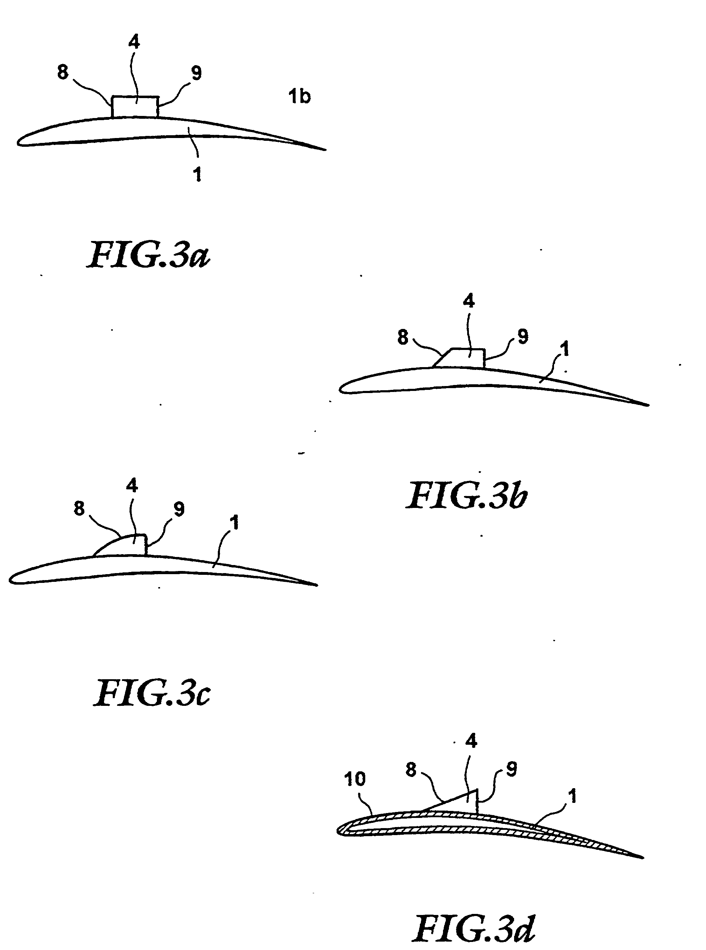

Die Fig. 3a bis 3d zeigen Abänderungen der Form des Hilfsflügels 4. Die Blickrichtung ist dabei senkrecht zur Strömungsrichtung an der Stelle des Hilfsflügels 4 parallel zur Schaufeloberfläche.

Der Hilfsflügel 4 der Fig. 3a ist eine schwach gewölbte Platte aus Kunststoff, die auf der Schaufel 1 über nicht gezeigte, oberflächenbündige Haltereinrichtungen in Form von Klebefalzen verklebt ist. Eine stromab gerichtete Abströmkante 9 des Hilfsflügels 4 weist einen geringeren Abstand zur in der Fig. 3a nicht dargestellten Wand 2 auf als die stromauf weisende Anströmkante 8. Der Hilfsflügel 4 in dieser einfachen Grundform kann ebenfalls als ein einfach auf die Saugseite 1a durch Punktschweißen aufgebrachter Blechwinkel ausgestaltet sein. Bei einer Umströmung der Schaufel 1, die leicht gestört werden kann, sollten die Befestigungseinrichtungen, mit denen der Hilfsflügel 4 auf der Schaufeloberfläche gehalten ist, nicht in die Strömung ragen, und keine Unebenheiten ausbilden.

Die Fig. 3b zeigt eine Abänderung des Hilfsflügels 4, dessen Anströmkante 8 gepfeilt ist. Fig. 3c zeigt eine weitere Abänderung des Hilfsflügels 4 mit einer gekrümmten Anströmkante 8. Diese beiden Anströmkanten sind besonders bei verunreinigten Strömungen sinnvoll, da Partikel schwerer an diesen schrägen Anströmkanten 8 haften bleiben können.

Der Hilfsflügel 4 der Fig. 3b ist für besonders große Strömungsgeschwindigkeiten ausgelegt und besitzt eine Dickenverteilung ähnlich einem Tragflächenprofil. Ähnlich einem Deltaflügel kann bei einem solchen Hilfsflügel 4 der Hufeisenwirbel am Fuß des Hilfsflügels geschwächt oder vermieden werden.

Sämtliche Hilfsflügel der Abänderungen der Fig. 3a bis 3d sind gegen die Schaufelströmung angestellt. Der Hilfsflügel der Fig. 3c ist im Spritzgußverfahren einstückig in einer Form mit der Schaufel 1 ausgebildet.

Der Hilfsflügel der Fig. 3d ist Teil eines Schutzüberzuges 10, der über die Schaufel 1 übergezogen wird. Der Schutzüberzug 10 dient als Korrosionsschutz sowie als Schwingungsdämpfer für die Schaufel 1. Die Integration des Hilfsflügels 4 in diesen Schutzüberzug ermöglicht das nachträgliche Ausrüsten von Schaufeln 1 mit dem Hilfsflügel 4, ohne daß die Schaufeloberfläche bearbeitet werden muß.

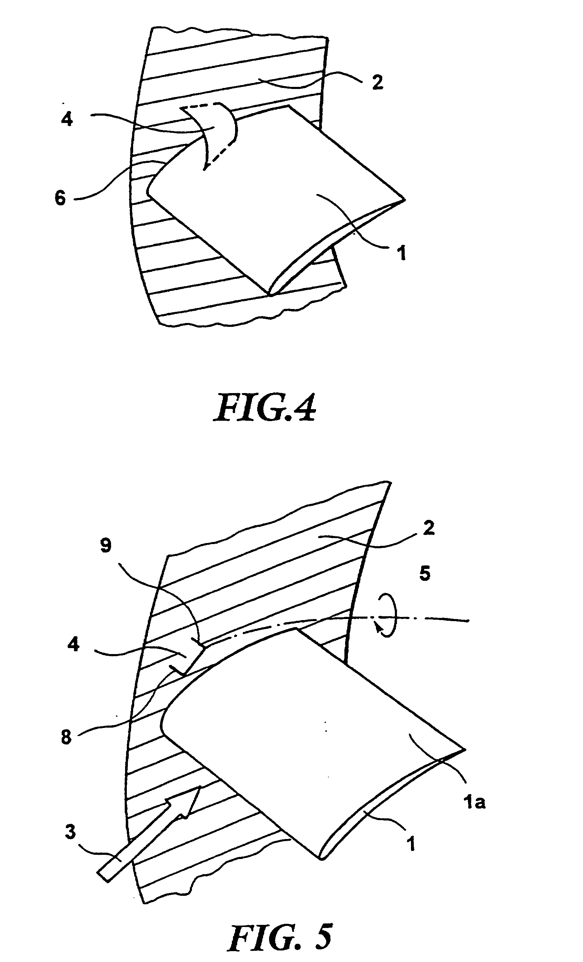

Die Fig. 4 zeigt ein zweites Ausführungsbeispiel des Hilfsflügels 4. Der Hilfsflügel 4 erstreckt sich in diesem Fall von der Oberfläche der Schaufel 1 zur Wand 2 und überbrückt dadurch die Ecke 6. Diese Ausgestaltung beschleunigt die Eckenströmung besonders wirksam, indem er als Düse wirkt.

Fig. 5 zeigt ein drittes Ausführungsbeispiel, bei dem der Hilfsflügel 4 an der Wand 2 im Übergangsbereich zwischen der Saugseite 1a der Schaufel 1 und der Wand 2 angeordnet ist. Dieser Hilfsflügel 4 besitzt eine etwas größere Höhe als der auf der Schaufel angebrachte Hilfsflügel, da die Grenzschicht der Wand 2 im allgemeinen dicker ist. Auch der an der Wand 2 angebrachte Hilfsflügel ragt in die Außenströmung.

Analog den Abänderungen der Fig. 2a, 2b und Fig. 3a bis 3d können bei dem an der Wand 2 angebrachten Hilfsflügel 4 entsprechende Konfigurationen verwendet werden. Wichtig in diesem Zusammenhang ist, daß der vom Hilfsflügel 4 erzeugte Wirbel 5 eine Drehrichtung aufweist, die auf der Schaufeloberfläche der Saugseite 1a von der Schaufelmitte zu den Schaufelenden gerichtet ist. Nur so wird schnell strömendes Fluid von der Schaufelmitte bzw. der Außenströmung in den ablösungsgefährdeten Eckenbereich geleitet. Um diese gleiche Drehrichtung des Wirbels 5 zu erhalten, ist der Hilfsflügel 4 so gegen die Strömung angestellt, daß seine Anströmkante 8 näher zur Schaufeloberfläche liegt als die Abströmkante 9.

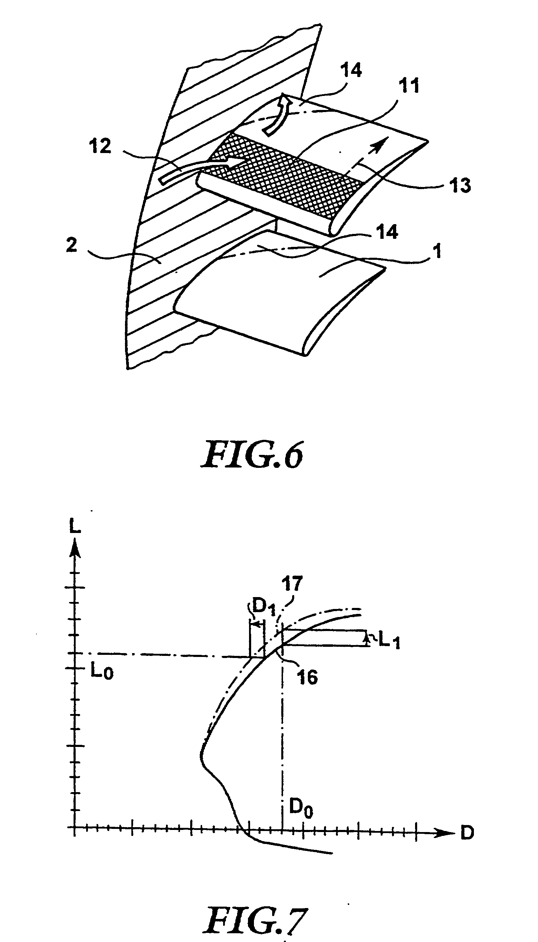

Im folgenden wird anhand der Fig. 6 die Wirkungsweise der Hilfsflügel 4 erläutert. Zu diesem Zweck ist in der Fig. 6 eine Strömung um eine Schaufel 1 im Übergangsbereich zwischen Schaufel 1 und Wand 2 dargestellt, bei der der erfindungsgemäße Hilfsflügel 4 nicht verwendet wird.

An der Wand 2 bildet sich eine Grenzschicht aus, deren Geschwindigkeit in Wandnähe sehr gering ist, da das Fluid dort durch die Wandreibung abgebremst wird. Auf der Saugseite 1a herrscht in einem vorderen Bereich 11 ein niedriger statischer Druck. Durch diesen niedrigen Druck wird langsames Fluid aus der Nähe der Wand 2 angesaugt, wie dies durch den Pfeil 12 angedeutet ist. Am hinteren, stromab gelegenen Ende des Bereichs 11 fängt der Druck an, in Richtung des Pfeiles 13 zuzunehmen. Das durch den im Bereich 11 herrschenden Unterdruck angesaugte Fluid 12 besitzt nicht genügend kinetische Energie, um diesen Druckanstieg bewältigen zu können und löst daher im Übergang zwischen Schaufel und Gehäusewand in der Nähe der Abströmkante der Schaufel in einem Bereich 14 ab.

Der Hilfsflügel 4 vermeidet die Ablösung im Bereich 14, indem der von ihm ausgebildete Wirbel 5 schnell strömendes Fluid in den Bereich 14 führt Dieses Fluid kann aufgrund seiner höheren kinetischen Energie den Druckanstieg 13 bewältigen, ohne abzulösen.

Fig. 6 zeigt schematisch die Auftriebspolare 16 einer Schaufel 1 ohne Hilfsflügel 4 im Vergleich zu einer Auftriebspolare 17 einer mit einem Hilfsflügel 4 versehenen Schaufel 1. Auf der Abszisse ist der Auftrieb L und auf der Ordinate der Widerstand D der jeweiligen Schaufel aufgetragen. Gegenüber einer Schaufel ohne Hilfsflügel steigt der Auftrieb L bei konstant bleibendem Widerstand D₀ um einen Betrag L₁ an, wenn ein Hilfsflügel 4 an der Schaufel 1 oder an der Wand 2 vorgesehen ist. Bei konstant gehaltenem Auftrieb L₀ sinkt der Widerstand D der Schaufel mit Hilfsflügel 4 an Wand 2 und/oder Schaufeloberfläche gegenüber einer Schaufel 1 ohne Hilfsflügel 4 um einen Betrag D₁. Durch die Unterdrückung der Strömungsablösung in den Ecken steigt somit der Auftrieb der Schaufeln und gleichzeitig sinkt der Widerstand der Schaufeln. Bei konstant gehaltenem Gewicht der Strömungsmaschine kann so der Leistungsumsatz gesteigert werden.

## Patentansprüche

1. Schaufelanordnung für eine Strömungsmaschine, beispielsweise einen Verdichter, eine Pumpe oder eine Turbine mit einer Schaufel und mindestens einer Wand, wobei sich die Schaufel von der Wand in die Strömung erstreckt und sich im Betrieb der Strömungsmaschine im Übergangsbereich zwischen Wand und Schaufel eine Eckenströmung ausbildet, **dadurch gekennzeichnet, daß** die Oberfläche der Schaufel (1) und/oder der Wand (2) im Bereich der Eckenströmung mit zumindest einem gegenüber der Schaufel (1) kleinen, sich von der Oberfläche der Schaufel (1) und/oder der Wand (2) weg in die Strömung (3) erstreckendem Hilfsflügel (4) versehen ist, der gegen die an dieser Stelle herrschende Strömung angestellt ist, wobei sich im Betrieb der Strömungsmaschine im Nachlauf des Hilfsflügels (4) ein Wirbel (5) bildet, dessen Drehsinn so gerichtet ist, daß auf der dem Hilfsflügel (4) zugeordneten Schaufeloberfläche eine Geschwindigkeit von der Schaufelmitte hin zum Übergangsbereich von Wand (2) und Schaufel (1) induziert ist.

2. Schaufelanordnung nach Anspruch 1, **dadurch gekennzeichnet, daß** eine stromauf weisende Anströmkante (8) des Hilfsflügels (4) in einem anderen Abstand von einer von Schaufel (1) und Wand (2) gebildeten Ecke angeordnet ist als eine stromab weisende Abströmkante (9) des Hilfsflügels (4).

3. Schaufelanordnung nach einem der Ansprüche 1 und 2, **dadurch gekennzeichnet, daß** die Abströmkante (9) des auf der Schaufel (1) angeordneten Hilfsflügels (4) von der Wand (2) geringer beabstandet ist als die Anströmkante (8).

4. Schaufelanordnung nach einem der obengenannten Änsprüche, **dadurch gekennzeichnet, daß** die Änströmkante (8) des an der Wand (2) angeordneten Hilfsflügels (4) von der Oberfläche der Schaufel (1) geringer beabstandet ist als die Äbströmkante (9).

5. Schaufelanordnung nach einem der obengenannten Ansprüche, **dadurch gekennzeichnet, daß** eine Höhe des Hilfsflügels (4) in einer Richtung senkrecht zur Oberfläche der Schaufel (1) mindestens einer Grenzschichtdicke der Schaufelumströmung an der Stelle des Hilfsflügels (4) entspricht.

6. Schaufelanordnung nach einem der obengenannten Ansprüche, **dadurch gekennzeichnet, daß** eine Höhe des Hilfsflügels in einer Richtung senkrecht zur Oberfläche der Wand (2) mindestens einer Grenzschichtdicke der Wandströmung an der Stelle des Hilfsflügels (4) entspricht.

7. Schaufelanordnung nach einem der obengenannten Ansprüche, **dadurch gekennzeichnet, daß** sich der Hilfsflügel im wesentlichen senkrecht von der Oberfläche der Schaufel (1) und/oder der Wand (2) in die Strömung erstreckt.

8. Schaufelanordnung nach einem der obengenannten Ansprüche, **dadurch gekennzeichnet, daß** sich der Hilfsflügel (4) von der Oberfläche der Schaufel (1) aus in Richtung der Wand (2) erstreckt.

9. Schaufelanordnung nach einem der obengenannten Ansprüche, **dadurch gekennzeichnet, daß** sich der Hilfsflügel (4) von der Oberfläche der Wand (2) aus in Richtung der Schaufel (1) erstreckt.

10. Schaufelanordnung nach einem der obengenannten Ansprüche, **dadurch gekennzeichnet, daß** der Hilfsflügel (4) auf der Oberfläche der Schaufel (1) in einem Abstand von der Wand (2) angeordnet ist, der 5% bis 30% der Schaufeltiefe entspricht.

11. Schaufelanordnung nach einem der obengenannten Ansprüche, **dadurch gekennzeichnet, daß** der Hilfsflügel (4) auf der Oberfläche der Wand (2) in einem Abstand von der Oberfläche der Schaufel (1) angeordnet ist, der 5% bis 30% der Schaufeltiefe entspricht.

12. Schaufelanordnung nach einem der obengenannten Ansprüche, **dadurch gekennzeichnet, daß** der Hilfsflügel (4) an der Saugseite (1a) der Schaufel (1) angeordnet ist.

13. Schaufelanordnung nach einem der obengenannten Ansprüche, **dadurch gekennzeichnet, daß** der Hilfsflügel (4) im wesentlichen plattenförmig ausgestaltet ist.

14. Schaufelanordnung nach einem der obengenannten Ansprüche, **dadurch gekennzeichnet, daß** der Hilfsflügel (4) in Form einer, vorzugsweise schwach, gewölbten Platte ausgestaltet ist.

15. Schaufelanordnung nach einem der obengenannten Ansprüche, **dadurch gekennzeichnet, daß** der Hilfsflügel (4) ein einem Tragflügel ähnliches Dickenprofil aufweist.

16. Schaufelanordnung nach einem der obengenannten Ansprüche, **dadurch gekennzeichnet, daß** die Länge des Hilfsflügels in Richtung der Strömung mindestens einer Höhe des an der Schaufeloberfläche angeordneten Hilfsflügels senkrecht zur Schaufeloberfläche oder des an der Wand (2) angeordneten Flügels senkrecht zur Wand entspricht.

17. Schaufelanordnung nach einem der obengenannten Ansprüche, **dadurch gekennzeichnet, daß** der Hilfsflügel (4) mit einem Anstellwinkel (A) zwischen 3° und 30°, vorzugsweise zwischen 5° und 15°, gegen die Strömung an der Stelle des Hilfsflügels (4) angestellt ist.

18. Schaufelanordnung nach einem der obengenannten Ansprüche, **dadurch gekennzeichnet, daß** der Hilfsflügel (4) in einem vorderen Bereich, vorzugsweise in der vorderen Hälfte, des Tragflügels oder an einem auf dieser Höhe liegenden Bereichs der Wand angeordnet ist.

19. Schaufelanordnung nach einem der obengenannten Ansprüche, **dadurch gekennzeichnet, daß** der Umriß des Hilfsflügels (4) in Blickrichtung senkrecht zur Strömungsrichtung an der Stelle des Hilfsflügels im wesentlichen dreieckig ist.

20. Schaufelanordnung nach einem der obengenannten Ansprüche, **dadurch gekennzeichnet, daß** der Umriß des Hilfsflügels (4) in Blickrichtung senkrecht zur Richtung der Schaufelumströmung an der Stelle des Hilfsflügels (4) im wesentlichen rechteckig ist.

21. Schaufelanordnung nach einem der obengenannten Ansprüche, **dadurch gekennzeichnet, daß** die Anströmkante (8) des Hilfsflügels (4) gerade oder gekrümmt ist.

22. Schaufelanordnung nach einem der obengenannten Ansprüche, **dadurch gekennzeichnet, daß** der Hilfsflügel (4) aus einem Blech gefertigt ist.

23. Schaufelanordnung nach einem der obengenannten Ansprüche, **dadurch gekennzeichnet, daß** der Hilfsflügel (4) an der Oberfläche der Schaufel (1) oder der Wand (2) durch ein thermisches Fügeverfahren, wie beispielsweise Schweißen oder Hartlöten, befestigt ist oder mit der Schaufel (1) oder der Wand (2) verschraubt oder vernietet ist oder verklebt ist

24. Schaufelanordnung nach einem der obengenannten Ansprüche, **dadurch gekennzeichnet, daß** der Hilfsflügel (4) einstückig mit der Schaufel (1) oder der Wand (2), beispielsweise durch Schmieden und/oder Sintern und/oder Ausfräsen und/oder galvanisches Umformen wie Elektroerodieren, ausgeformt ist.

25. Schaufelanordnung nach einem der obengenannten Ansprüche, **dadurch gekennzeichnet, daß** der Hilfsflügel (4) in einem Schutzüberzug (11) der Schaufel (1) integriert ist, der zur Schwingungsdämpfung oder als Korrosionsschutz über die Schaufel (1) gezogen ist.

26. Schaufelanordnung nach einem der obengenannten Ansprüche, **dadurch gekennzeichnet, daß** sich der Hilfsflügel (4) brückenförmig von der Oberfläche der Schaufel (1) zur Wand (2) erstreckt.

27. Schaufelanordnung nach einem der oben genannten Ansprüche, **dadurch gekennzeichnet, daß** die Schaufel (1) an einer Nabe (2a) befestigt ist, wobei die Wand (2) von der Nabe (2a) gebildet ist.

28. Schaufelanordnung nach einem der obengenannten Ansprüche, **dadurch gekennzeichnet, daß** die Schaufel (1) zwischen einer Nabe (2a) und einem Gehäuse (2b) angeordnet ist.

29. Schaufelanordnung nach einem der obengenannten Anspürche, **dadurch gekennzeichnet, daß** die Schaufel (1) Teil eines Laufrades oder eines Leitrades ist.

## Claims

1. Blade arrangement for a continuous-flow machine, for example a compressor, a pump or a turbine, with a blade and at least one wall, wherein the blade extends from the wall into the flow and a corner flow develops in the transition zone between wall and blade during operation of the continuous-flow machine, **characterized in that** the surface of the blade (1) and/or of the wall (2) in the zone of corner flow is provided with at least one auxiliary vane (4) which is small in relation to the blade (1), juts into the flow (3) from the surface of the blade (1) and/or of the wall (2), and is inclined to the flow at this point, a vortex (5) being formed in the wake of the auxiliary vane (4) during operation of the continuous-flow machine, the sense of rotation of this vortex (5) being such that a velocity from the centre of the blade towards the transition zone of wall (2) and blade (1) is induced on the blade surface associated with the auxiliary vane (4).

2. Blade arrangement according to Claim 1, **characterized in that** an upstream-pointing leading edge (8) of the auxiliary vane (4) is located at a distance from a corner formed by blade (1) and wall (2) that is different from that at which a downstream-pointing trailing edge (9) of the auxiliary vane (4) is located.

3. Blade arrangement according to Claim 1 or Claim 2, **characterized in that** the trailing edge (9) of the auxiliary vane (4) arranged on the blade (1) is at a smaller distance from the wall (2) than is the leading edge (8).

4. Blade arrangement according to any one of the above-mentioned claims, **characterized in that** the leading edge (8) of the auxiliary vane (4) arranged on the wall (2) is at a smaller distance from the surface of the blade (1) than is the trailing edge (9).

5. Blade arrangement according to any one of the above-mentioned claims, **characterized in that** a height of the auxiliary vane (4) in a direction perpendicular to the surface of the blade (1) is at least equal to a boundary layer thickness of the flow around the blade at the location of the auxiliary vane (4).

6. Blade arrangement according to any one of the above-mentioned claims, **characterized in that** a height of the auxiliary vane in a direction perpendicular to the surface of the wall (2) is at least equal to a boundary layer thickness of the flow along the wall at the location of the auxiliary vane (4).

7. Blade arrangement according to any one of the above-mentioned claims, **characterized in that** the auxiliary vane extends into the flow essentially vertically from the surface of the blade (1) and/or wall (2).

8. Blade arrangement according to any one of the above-mentioned claims, **characterized in that** the auxiliary vane (4) extends towards the wall (2) from the surface of the blade (1).

9. Blade arrangement according to any one of the above-mentioned claims, **characterized in that** the auxiliary vane (4) extends towards the blade (1) from the surface of the wall (2).

10. Blade arrangement according to any one of the above-mentioned claims, **characterized in that** the auxiliary vane (4) is located on the surface of the blade (1) at a distance from the wall (2) which is equal to 5% to 30% of the blade depth.

11. Blade arrangement according to any one of the above-mentioned claims, **characterized in that** the auxiliary vane (4) is located on the surface of the wall (2) at a distance from the surface of the blade (1) which is equal to 5% to 30% of the blade depth.

12. Blade arrangement according to any one of the above-mentioned claims, **characterized in that** the auxiliary vane (4) is located on the intake side (1 a) of the blade (1).

13. Blade arrangement according to any one of the above-mentioned claims, **characterized in that** the auxiliary vane (4) is of essentially plate-like design.

14. Blade arrangement according to any one of the above-mentioned claims, **characterized in that** the auxiliary vane (4) is designed as a, preferably gently, arched plate.

15. Blade arrangement according to any one of the above-mentioned claims, **characterized in that** the auxiliary vane (4) has a thickness profile similar to an aerofoil.

16. Blade arrangement according to any one of the above-mentioned claims, **characterized in that** the length of the auxiliary vane (4) in the direction of flow is equal to at least a height of the auxiliary vane arranged on the blade surface perpendicular to the blade surface, or, of the vane arranged on the wall (2), perpendicular to the wall.

17. Blade arrangement according to any one of the above-mentioned claims, **characterized in that** the auxiliary vane (4) is set at an angle of attack (A) of between 3° and 30°, and preferably between 5° and 15°, to the flow at the location of the auxiliary vane (4).

18. Blade arrangement according to any one of the above-mentioned claims, **characterized in that** the auxiliary vane (4) is located in a forward zone, preferably in the front half, of the supporting aerofoil, or on a region of the wall level therewith.

19. Blade arrangement according to any one of the above-mentioned claims, **characterized in that** the profile of the auxiliary vane (4), viewed perpendicularly to the direction of flow at the location of the auxiliary vane, is essentially triangular.

20. Blade arrangement according to any one of the above-mentioned claims, **characterized in that** the profile of the auxiliary vane (4), viewed perpendicularly to the direction of flow over the blade at the location of the auxiliary vane (4), is essentially rectangular.

21. Blade arrangement according to any one of the above-mentioned claims, **characterized in that** the leading edge (8) of the auxiliary vane (4) is straight or curved.

22. Blade arrangement according to any one of the above-mentioned claims, **characterized in that** the auxiliary vane (4) is made from a metal plate.

23. Blade arrangement according to any one of the above-mentioned claims, **characterized in that** the auxiliary vane (4) is fixed to the surface of the blade (1) or wall (2) by a thermal joining process such as welding or brazing for example or is screwed or riveted or bonded to the blade (1) or wall (2).

24. Blade arrangement according to any one of the above-mentioned claims, **characterized in that** the auxiliary vane (4) is formed in one piece with the blade (1) or wall (2), for example by forging and/or sintering and/or by machining from solid and/or by galvanic forming such as electroeroding.

25. Blade arrangement according to any one of the above-mentioned claims, **characterized in that** the auxiliary vane (4) is integrated in a protective covering (11) of the blade (1) which is drawn over the blade (1) as a vibration damper or as protection against corrosion.

26. Blade arrangement according to any one of the above-mentioned claims, **characterized in that** the auxiliary vane (4) extends as a bridge from the surface of the blade (1) to the wall (2).

27. Blade arrangement according to any one of the above-mentioned claims, **characterized in that** the blade (1) is attached to a hub (2a) the wall (2) being formed by the hub (2a).

28. Blade arrangement according to any one of the above-mentioned claims, **characterized in that** the blade (1) is arranged between a hub (2a) and a casing (2b).

29. Blade arrangement according to any one of the above-mentioned claims, **characterized in that** the blade (1) is part of a blade wheel or of a stator.

## Revendications

1. Ensemble de pale pour une turbomachine, par exemple un compresseur, une pompe ou une turbine, avec une pale et au moins une paroi, la pale s'étendant depuis la paroi vers l'intérieur de l'écoulement et un écoulement d'angle se formant dans la zone de transition entre la paroi et la pale lors du fonctionnement de la turbomachine, **caractérisé en ce que** la surface de la pale (1) et/ou de la paroi (2) est munie dans la zone de l'écoulement d'angle d'au moins un aileron auxiliaire (4), qui est petit par rapport à la pale (1) et qui s'écarte de la surface de la pale (1) et/ou de la paroi (2) vers l'intérieur de l'écoulement (3) avec un calage par rapport à l'écoulement se produisant à cet endroit, alors que, pendant le fonctionnement de la turbomachine, se forme dans le sillage de l'aileron auxiliaire (4) un tourbillon (5), dont le sens de rotation est orienté de telle façon que sur la surface de la pale affectée par l'aileron auxiliaire (4) une vitesse d'écoulement soit induite depuis le centre de la pale jusqu'à la zone de transition entre la paroi (2) et la pale (1).

2. Ensemble de pale selon la revendication 1, **caractérisé en ce qu'**un bord d'attaque (8) de l'aileron auxiliaire (4) dirigé vers l'amont de l'écoulement est disposé avec un autre espacement par rapport à un angle formé par la pale (1) et la paroi (2) qu'un bord de fuite (9) de l'aileron auxiliaire (4) dirigé vers l'aval de l'écoulement.

3. Ensemble de pale selon l'une quelconque des revendications 1 et 2, **caractérisé en ce que** le bord de fuite (9) de l'aileron auxiliaire (4) disposé sur la pale (1) est moins éloigné de la paroi (2) que le bord d'attaque (8).

4. Ensemble de pale selon l'une quelconque des revendications susmentionnées, **caractérisé en ce que** le bord d'attaque (8) de l'aileron auxiliaire (4) disposé sur la paroi (2) est moins éloigné de la surface de la pale (1) que le bord de fuite (9).

5. Ensemble de pale selon l'une quelconque des revendications susmentionnées, **caractérisé en ce qu'**une hauteur de l'aileron auxiliaire (4) correspond, dans une direction perpendiculaire à la surface de la pale (1), au moins à une épaisseur de couche limite de l'écoulement autour la pale à l'endroit de l'aileron auxiliaire (4).

6. Ensemble de pale selon l'une quelconque des revendications susmentionnées, **caractérisé en ce qu'**une hauteur de l'aileron auxiliaire correspond, dans une direction perpendiculaire à la surface de la paroi (2), au moins à une épaisseur de couche limite de l'écoulement sur la paroi à l'endroit de l'aileron auxiliaire (4).

7. Ensemble de pale selon l'une quelconque des revendications susmentionnées, **caractérisé en ce que** l'aileron auxiliaire s'étend essentiellement perpendiculairement depuis la surface de la pale (1) et/ou de la paroi (2) à l'intérieur de l'écoulement.

8. Ensemble de pale selon l'une quelconque des revendications susmentionnées, **caractérisé en ce que** l'aileron auxiliaire (4) s'étend depuis la surface de la pale (1) en direction de la paroi (2).

9. Ensemble de pale selon l'une quelconque des revendications susmentionnées, **caractérisé en ce que** l'aileron auxiliaire (4) s'étend depuis la surface de la paroi (2) en direction de la pale (1).

10. Ensemble de pale selon l'une quelconque des revendications susmentionnées, **caractérisé en ce que** l'aileron auxiliaire (4) est disposé sur la surface de la pale (1) avec un espacement par rapport à la paroi (2) qui correspond à 5% jusqu'à 30% de la profondeur de la pale.

11. Ensemble de pale selon l'une quelconque des revendications susmentionnées, **caractérisé en ce que** l'aileron auxiliaire (4) est disposé sur la surface de la paroi (2) avec un espacement par rapport à la surface de la pale (1) qui correspond à 5% jusqu'à 30% de la profondeur de la pale.

12. Ensemble de pale selon l'une quelconque des revendications susmentionnées, **caractérisé en ce que** l'aileron auxiliaire (4) est disposé sur le côté aspiration (1a) de la pale (1).

13. Ensemble de pale selon l'une quelconque des revendications susmentionnées, **caractérisé en ce que** l'aileron auxiliaire (4) est configuré essentiellement en forme de lame.

14. Ensemble de pale selon l'une quelconque des revendications susmentionnées, **caractérisé en ce que** l'aileron auxiliaire (4) est configuré en forme d'une lame bombée, de préférence faiblement bombée.

15. Ensemble de pale selon l'une quelconque des revendications susmentionnées, **caractérisé en ce que** l'aileron auxiliaire (4) comprend un profil d'épaisseur ressemblant à une aile portante.

16. Ensemble de pale selon l'une quelconque des revendications susmentionnées, **caractérisé en ce que** la longueur de l'aileron auxiliaire (4) en direction de l'écoulement correspond, perpendiculairement à la surface de la pale, au moins à une hauteur de l'aileron auxiliaire disposé sur la surface de la pale ou, perpendiculairement à la paroi, à une hauteur de l'aileron disposé sur la paroi (2).

17. Ensemble de pale selon l'une quelconque des revendications susmentionnées, **caractérisé en ce que** l'aileron auxiliaire (4) est calé par rapport à l'écoulement à l'endroit de l'aileron auxiliaire (4) avec un angle d'incidence (A) situé entre 3° et 30°, de préférence entre 5° et 15°.

18. Ensemble de pale selon l'une quelconque des revendications susmentionnées, **caractérisé en ce que** l'aileron auxiliaire (4) est disposé dans une zone avant, de préférence dans la moitié avant, de l'aile portante ou dans une zone de la paroi se trouvant à cette hauteur.

19. Ensemble de pale selon l'une quelconque des revendications susmentionnées, **caractérisé en ce que** le contour de l'aileron auxiliaire (4), en regardant dans la direction perpendiculaire au sens de l'écoulement à l'endroit de l'aileron auxiliaire, est essentiellement triangulaire.

20. Ensemble de pale selon l'une quelconque des revendications susmentionnées, **caractérisé en ce que** le contour de l'aileron auxiliaire (4), en regardant dans la direction perpendiculaire au sens de l'écoulement autour de la pale à l'endroit de l'aileron auxiliaire, est essentiellement rectangulaire.

21. Ensemble de pale selon l'une quelconque des revendications susmentionnées, **caractérisé en ce que** le bord d'attaque (8) de l'aileron auxiliaire (4) est droit ou courbé.

22. Ensemble de pale selon l'une quelconque des revendications susmentionnées, **caractérisé en ce que** l'aileron auxiliaire (4) est fabriqué à partir d'une tôle.

23. Ensemble de pale selon l'une quelconque des revendications susmentionnées, **caractérisé en ce que** l'aileron auxiliaire (4) est fixé sur la surface de la pale (1) ou de la paroi (2) à l'aide d'un procédé d'assemblage thermique, tel que par exemple la soudure ou la brasure, ou est vissé, riveté ou collé sur la pale (1) ou sur la paroi (2).

24. Ensemble de pale selon l'une quelconque des revendications susmentionnées, **caractérisé en ce que** l'aileron auxiliaire (4) est formé d'une seule pièce avec la pale (1) ou avec la paroi (2), par exemple par forgeage et/ou par frittage et/ou par assemblage par fraisage et/ou par transformation galvanique, telle qu'une électroérosion.

25. Ensemble de pale selon l'une quelconque des revendications susmentionnées, **caractérisé en ce que** l'aileron auxiliaire (4) est intégré dans un revêtement de protection (11) de la pale (1), qui est disposé pardessus la pale (1) pour l'amortissement des vibrations ou en tant que protection anti-corrosion.

26. Ensemble de pale selon l'une quelconque des revendications susmentionnées, **caractérisé en ce que** l'aileron auxiliaire (4) s'étend en forme de pont depuis la surface de la pale (1) jusqu'à la paroi (2).

27. Ensemble de pale selon l'une quelconque des revendications susmentionnées, **caractérisé en ce que** la pale (1) est fixée sur un moyeu (2a), la paroi (2) étant formée par le moyeu (2a).

28. Ensemble de pale selon l'une quelconque des revendications susmentionnées, **caractérisé en ce que** la pale (1) est placée entre un moyeu (2a) et un boîtier (2b).

29. Ensemble de pale selon l'une quelconque des revendications susmentionnées, **caractérisé en ce que** la pale (1) est une partie d'une roue à aubes ou d'une roue de turbine.
